## Europäisches Patentamt
## European Patent Office
## Office européen des brevets

(19)

(11) Veröffentlichungsnummer : **0 134 450**
**B1**

(12)

# EUROPÄISCHE PATENTSCHRIFT

(45) Veröffentlichungstag der Patentschrift :
01.02.89

(21) Anmeldenummer : 84107403.2

(22) Anmeldetag : 28.06.84

(51) Int. Cl.⁴ : **C 08 F 2/26**, C 08 F 4/28,
C 09 J 3/14, D 21 H 3/38

(54) Verfahren zur Herstellung wässriger Polymerdispersionen und ihre Verwendung.

(30) Priorität : 01.07.83 DE 3323810

(43) Veröffentlichungstag der Anmeldung :
20.03.85 Patentblatt 85/12

(45) Bekanntmachung des Hinweises auf die Patenterteilung : 01.02.89 Patentblatt 89/05

(84) Benannte Vertragsstaaten :
CH DE FR GB LI NL

(56) Entgegenhaltungen :
GB—A— 854 191
US—A— 2 388 602
US—A— 3 784 491
Die Akte enthält technische Angaben, die nach dem
Eingang der Anmeldung eingereicht wurden und die
nicht in dieser Patentschrift enthalten sind.

(73) Patentinhaber : WACKER-CHEMIE GMBH
Prinzregentenstrasse 22
D-8000 München 22 (DE)

(72) Erfinder : Eck, Herbert, Dr. Dipl.-Chem.
Burg 11
D-8263 Burghausen (DE)
Erfinder : Jira, Reinhard, Dr. Dipl.-Chem.
Haydnstrasse 13
D-8263 Burghausen (DE)

EP 0 134 450 B1

## Beschreibung

Die Möglichkeit der Verwendung von Gelatine oder Casein als Schutzkolloid bei der Herstellung wäßriger Polymerdispersionen ist bereits mehrfach vorgeschlagen worden.

Beispielsweise wird in der US-A-2 388 602 ein Verfahren zur Herstellung wäßriger Vinylester-Polymerdispersionen beschrieben, demzufolge das Monomer in einer wäßrigen Lösung eines Emulgators, eines Katalysators und von Schutzkolloid, z. B. Gelatine emulgiert und danach unter Rühren polymerisiert wird.

Aus der DE-A-2 141 864 ist ein Verfahren bekannt, bei dem Vinylchlorid und Ethylen sowie gegebenenfalls weitere Comonomere unter Verwendung anorganischer wasserlöslicher peroxidischer Initiatoren in der Weise polymerisiert werden, daß Ethylen auf die wäßriger Reaktionsmischung aufgepreßt, Vinylchlorid und die anderen Comonomeren über mindestens 6 Stunden dosiert und möglichst geringe Mengen Emulsionsstabilisator, z. B. weniger als 0,4 %, bezogen auf Vinylchlorid und die anderen Comonomeren, eingesetzt werden. Wesentlich ist für dieses Verfahren überdies die Vorlage eines Impflatex.

Da für verschiedene Anwendungen von Polymerdispersionen ein Emulgatorgehalt unerwünscht ist, bestand nun die Aufgabe darin, ein Verfahren zur Herstellung wäßriger Polymerdispersionen zu finden, bei dem auf den Zusatz von Emulgatoren bei der Polymerisation verzichtet werden kann. Außerdem sollte es möglich gemacht werden, auf die zusätzliche Herstellung eines Samenlatex zu verzichten, trotzdem aber stippen- und koagulatfreie Dispersionen zu erhalten, die die in der heutigen Praxis erforderliche Stabilität auch z. B. bei Scherung, Temperatureinflüssen, Elektrolytzusatz besitzen.

Gegenstand der Erfindung ist demnach ein Verfahren zur Herstellung wäßriger Polymerdispersionen durch Polymerisation ethylenisch ungesättigter Verbindungen mittels freie Radikale liefernder, zumindest teilweise wasserlöslicher Initiatoren bei Reaktionstemperaturen von + 10 bis + 100 °C in Gegenwart mindestens eines wasserlöslichen Proteins und gegebenenfalls weiterer üblicher Zusatzstoffe unter Vorlage von höchstens 40 Gew.-% der gesamten Monomeren und Dosierung des Restes der Monomeren während der Polymerisation, dadurch gekennzeichnet, daß als Initiatoren, gegebenenfalls mit wasserlöslichen Reduktionsmitteln, Ketonperoxide und/oder organische Hydroperoxide in Mengen von mindestens 30 mmol, bezogen auf 1 kg des gesamten Monomeren(gemisches), und daß das (die) Protein(e) in Mengen von mindestens 3 Gew.-%, bezogen auf das Gesamtgewicht der Monomeren, eingesetzt wird (werden), wobei mindestens 30 Gew.-% des Proteins/der Proteine während der Polymerisation dosiert werden, sowie daß die Polymerisation so geführt wird, daß der (die) isoelektrische(n) Punkt(e) des Proteins (der Proteine) nicht tangiert oder durchschritten wird (werden) und daß kein Emulgator vorhanden ist.

Erfindungsgemäß lassen sich insbesondere Styrol, das gegebenenfalls substituiert sein kann, (Meth-) Acrylsäureester mit verzweigten oder unverzweigten gesättigten $C_1$- bis $C_{18}$-Alkoholen, (Meth-) Acrylnitril, Diene, Vinyl- oder Allylester von aliphatischen, araliphatischen oder aromatischen $C_1$- bis $C_{19}$-Carbonsäuren und Vinylhalogenide polymerisieren.

Sie können in vielen Fällen einzeln oder, soweit es die Copolymerisationsparameter gestatten, im Gemisch, gegebenenfalls mit weiteren Monomeren, insbesondere mit Alkenen, wie Ethylen, Propylen, Isobutylen, mit Acryl-, Methacryl-, Itakon-, Croton-, Fumar- und Maleinsäure, deren Mono- und/oder Diestern mit den oben genannten Alkoholen, deren Amiden oder Nitrilen (co)polymerisiert werden.

Auch Vinylsulfonate, Monoester von Di- oder Polyhydroxylverbindungen mit (Meth-) Acrylsäure oder Crotonsäure, N-Vinyl-2-pyrrolidon, Vinylpyridin, N-Vinyllactone, Vinyl- oder Allyl(di-) acetylacetat, Vinyl- oder (Meth-) Acryloylalkoxysilane ; Vinyl- oder Allylverbindungen von Glycidylalkohol, alpha-Chloralkylcarbonsäuren und Dichlortriazinen, sowie olefinisch ungesättigte N-Methylolamide, z. B. N-Methylol(meth) acrylamid, N-Methylolallylcarbamat, N-Methylolallylether, Mannichbasen, N-Methylolester und -ether von N-Methylol(meth) acrylamid können als Comonomere eingesetzt werden.

Als bi- oder polyfunktionelle Comonomere seien beispielsweise die folgenden Verbindungen genannt :

Divinyl- und Diallylether von Glykolen, Divinyl- und Diallylester von gesättigten Dicarbonsäuren, Polyvinyl- und Polyallylester von Polycarbonsäuren, Di- und Polyester von Di- und Polyhydroxyverbindungen mit (Meth-) Acrylsäure, Vinyl- und Allylester der (Meth-) Acryl-, Croton-, Malein- und Fumarsäure und Divinylbenzol.

Die erwähnten Comonomeren können, soweit es die Copolymerisationsparameter und die gewünschten Eigenschaften der Dispersion bzw. des Copolymerisats zulassen, mit den eingangs genannten Monomeren oder deren Gemischen copolymerisiert werden.

Als Beispiele für die Monomeren, die sich erfindungsgemäß homo- oder copolymerisieren lassen, seien genannt :

Styrol, Chlorstyrol, Methylstyrol, Methyl(meth) acrylat, Ethyl(meth) acrylat, Propyl(meth) acrylat, Butyl(meth) acrylat, Ethylhexyl(meth) acrylat, Lauryl(meth) acrylat, Butadien, Isopren, Cyclobutadien, Vinylidenchlorid, Vinylformiat, Vinylacetat, Vinylpropionat, Vinylhexanoat, Vinyllaurat, Vinylstearat, die den genannten Vinylestern entsprechenden Allylester, Vinylester von in α-Stellung verzweigten Alkylcarbonsäuren, die nach der sogenannten Koch-Synthese hergestellt werden (Ester der Versatic⁵-säuren,

Shell AG), Vinylfluorid, Vinylchlorid und Vinylbromid.

Als freie Radikale liefernde, zumindest teilweise wasserlösliche Initiatoren, die vorzugsweise in Kombination mit wasserlöslichen Reduktionsmitteln als Redox-Initiatorsystem eingesetzt werden, eignen sich Ketoperoxide, insbesondere Acetylacetonperoxid, und/oder organische Hydroperoxide ; bevorzugt werden Alkyl- und/oder Aralkylhydroperoxide verwendet. Namentlich zu nennen sind :

Isopropylhydroperoxid, tert.-Butylhydroperoxid, Cumolhydroperoxid, Diisopropylphenylhydroperoxid, Pinanhydroperoxid, p-Nitrocumolhydroperoxid, p-tert.-Butylphenylhydroperoxid, tert.-Amylhydroperoxid, 2,5-Dimethylhexan-2,5-dihydroperoxid.

Als bevorzugte Reduktionsmittel sind reduzierende Schwefelverbindungen, insbesondere Salze der Sulfoxylsäure und der schwefeligen Säure, sowie Ascorbinsäure zu nennen. Als einzelne Schwefelverbindungen sind Natrium- und Zinkformaldehydsulfoxylat, Natriumbisulfit und Natriumsulfit zu nennen.

Die genannten Oxydations- und Reduktionsmittel können jeweils einzeln oder als Gemische verwendet werden. Vorzugsweise wird die Oxydationskomponente gegenüber der Reduktionskomponente im Überschuß eingesetzt. Dies kann z. B. dadurch geschehen, daß das Oxydationsmittel ganz oder teilweise vorgelegt wird, während das Reduktionsmittel und gegebenenfalls der Rest der Oxydationskomponente vorzugsweise im Maße ihres Verbrauches während der Polymerisation dosiert werden.

Selbstverständlich können aber auch beide Komponenten eines Redox-Systems dosiert werden. Der peroxidische Initiator wird in Mengen von mindestens 30 mmol, vorzugsweise mindestens 45 mmol, bezogen auf 1 kg des gesamten Monomeren(gemisches), eingesetzt. Die Menge des gegebenenfalls mitverwendeten Reduktionsmittels beträgt vorzugsweise 15 bis 95 Mol-%, insbesondere bis 80 Gew.-%, bezogen auf peroxidische Verbindung(en).

Als Reaktionsgemisch werden hier das Wasser und darin gelöste oder dispergierte Reaktionskomponenten und Verbindungen bezeichnet.

Die Obergrenze der Konzentration des Initiators richtet sich nach Art der eingesetzten Monomeren und insbesondere nach der gewählten Reaktionstemperatur und dem beabsichtigten Polymerisationsgrad. Auch das Schutzkolloid hat einen gewissen Einfluß auf die zu verwendende Menge des Initiators. Der Fachmann kann die optimalen Mengen jedoch in einigen wenigen Vorversuchen ohne Schwierigkeiten ermitteln. Im allgemeinen werden 3 Gew.-%, bezogen auf die Gesamtmenge der Monomeren genügen.

Als Schutzkolloide werden einzeln oder im Gemisch miteinander, vorzugsweise einzeln, in Wasser lösliche bzw. durch bekannte Aufschlußverfahren in Wasser löslich gemachte Proteine eingesetzt.

Als Beispiele für solche geeignete Proteine seien genannt :
— tierische Proteine, wie Gelatine, Casein, Fischproteine, Fischproteinkonzentrate ;
— pflanzliche Proteine, die z. B. aus Blatteiweißkonzentraten, Weizen, Kartoffeln, Reis, Tapioka gewonnen werden, Proteine aus Ölsamen, z. B. gewonnen aus Sojabohnen, Erdnüssen, Sonnenblumensamen, Kattunsamen, Raps, Kokosnüssen,
— Proteine aus Mikroorganismen, die z. B. Stärke, Cellulose, $CO_2$, Kohlenwasserstoffe, Alkohole usw. als Kohlenstoffquelle nutzen.

Mindestens 30 Gew.-% der Proteingesamtmenge werden während der Polymerisation dosiert. Gemäß einer bevorzugten Ausführungsform wird mind. 60 Gew.-% der Gesamtmenge parallel zur Monomerdosierung dem Reaktionsgemisch zugesetzt. Es ist dabei auch möglich, die Monomeren unter Verwendung der Proteine zu emulgieren und diese Voremulsion dann zu dosieren.

Es ist gemäß einer weiteren bevorzugten Ausführungsform auch möglich, die gesamte Proteinmenge gegebenenfalls im Rahmen der genannten Voremulsion zu dosieren. Die Dosierung wird dabei vorzugsweise spätestens bei einem Festgehalt des Reaktionsgemisches von 20, insbesondere von 10 Gew.-%, bezogen auf Gesamtgewicht des Reaktionsgemisches, begonnen.

Die Obergrenze der Schutzkolloidmenge wird praktisch nicht durch das erfindungsgemäße Polymerisationsverfahren, sondern durch den Einsatzzweck der fertigen Dispersion gesetzt. Natürlich setzt auch die Viskosität der Proteine der einsetzbaren Menge Grenzen. Dies wird z. B. daraus ersichtlich, daß diese Grenze beim Einsatz von Knetern für die Polymerisation weiter hinausgeschoben werden kann.

Hochviskose Proteintypen, z. B. Gelatine 160 B, können z. B. vorzugsweise bis 10 Gew.-%, sehr niederviskose Typen, z. B. Gelita Sol E, hingegen z. B. vorzugsweisze bis 100 Gew.-%, insbesondere bis 50 Gew.-%, bezogen auf Gesamtmonomergewicht, eingesetzt werden. Schutzkolloide mit dazwischenliegenden Viskositäten können dementsprechend in Mengen vorzugsweise von 10 bis 50 Gew.-% verwendet werden.

Das erfindungsgemäße Polymerisationsverfahren wird bei 10 bis 100 °C, vorzugsweise 35 bis 80 °C, und vorzugsweise bei Drucken bis 200 bar durchgeführt. Wird kein Ethylen eingesetzt, wird die Polymerisation vorzugsweise höchstens beim autogenen Druck der Monomeren bei der jeweiligen Reaktionstemperatur durchgeführt. Beim Einsatz von Ethylen genügen in einer besonders bevorzugten Ausführungsform Drucke von bis 100 bar.

Sofern Ethylen mitpolymerisiert wird, kann es zur Gänze vorgelegt oder teilweise dosiert werden. Vorzugsweise wird ein bestimmter gewünschter Druck vor der Polymerisation eingestellt und dann gegebenenfalls durch Nachdrücken von Ethylen über die Polymerisation konstant gehalten. Natürlich kann der Ethylendruck während der Polymerisationsreaktion auch variiert werden, sofern dies z. B. zur Herstellung von Polymerisaten unterschiedlicher Zusammensetzung gewünscht wird.

3

Die anderen Monomeren, bzw. Comonomeren werden zu höchstens 40 Gew.% der Gesamtmenge vorgelegt, der Rest wird während der Polymerisation, vorzugsweise im Maße des Verbrauches dosiert. Die Zugabe kann getrennt, als Gemisch und/oder als Voremulsion erfolgen.

Es hat sich weiterhin als vorteilhaft erwiesen, die Gesamtmonomerenkonzentration dieser anderen Monomeren im Reaktionsgemisch unter 20 Gew.-%, weiter bevorzugt bei höchstens 15 Gew.-%, bezogen auf das Gesamtgewicht des Reaktionsgemisches, zu halten. Sofern Ethylen copolymerisiert wird, insbesondere wenn Copolymere mit mehr als 10 Gew.-% einpolymerisierter Ethyleneinheiten angestrebt sind, wird die Gesamtkonzentration dieser anderen Comonomeren, d. h. der ungesättigten Ester, halogensubstituierten Ethylene usw., besonders vorzugsweise bei höchstens 10 Gew.-%, insbesondere höchstens 5 Gew.-%, bezogen auf das Gesamtgewicht des Reaktionsgemisches gehalten. Die Monomeren können getrennt, gemischt und/oder als Voremulsion bzw. gegebenenfalls als wäßrige Lösung zugegeben werden.

Die Polymerisation kann bei pH-Werten von ca. 2 bis ca. 10 durchgeführt werden, jedoch sind dabei diejenigen pH-Werte ausgeschlossen, die dem isoelektrischen Punkt eines eingesetzten Proteins entsprechen. Das Erreichen eines solchen Wertes bewirkt bei verschiedenen Proteinen, z. B. Casein, deren Koagulation und im allgemeinen damit auch die des Polymerisates. Bei anderen Proteinen, z. B. den Gelatinen, wird in solchen Fällen die Schutzkolloidwirkung stark vermindert, was vielfach auch die Koagulation zur Folge hat.

Vorzugsweise wird auf der basischen Seite des isoelektrischen Punktes das Protein polymerisiert, da hier der Bedarf an Schutzkolloid niedriger liegt als auf der sauren Seite.

Der pH-Wert kann in üblicher Weise, z. B. durch Zusatz von Puffersubstanzen in üblicher Menge, kontrolliert werden. Solche übliche Puffersubstanzen sind wasserlösliche Hydrogensalze mehrbasischer Säuren, z. B. Alkalisalze der Phosphorsäure, der Schwefelsäure und der Kohlensäure, namentlich Natriumbicarbonat, -bisulfat, Dinatriumhydrogenphosphat u. ä.

Als weitere übliche Zusatzstoffe werden gegebenenfalls Molekulargewichtsregler, Schutzkolloide wie Polyvinylalkohole (teilverseiftes Polyvinylacetat), Cellulosederivate u. ä. in den üblichen Mengen eingesetzt. Allerdings werden diese Dispergierhilfsstoffe und Dispersionsstabilisatoren, sofern überhaupt, vorzugsweise erst der fertigen Dispersion nach Ende der Polymerisation zugesetzt, da sie sonst vielfach in unerwünschter Weise in die Polymerisation eingreifen oder die Produkte in unerwünschter Weise modifizieren können.

Nach Ende der Polymerisation können auch andere übliche Zusätze in die erfindungsgemäß hergestellten Dispersionen in üblichen Mengen eingebracht werden. Als Beispiele hierfür seien Filmbildungshilfsstoffe, Weichmacher, Pesticide, Emulgatoren, Stabilisatoren gegen thermische oder elektromagnetische Schädigung u. a. m. genannt.

Überraschenderweise können nach dem erfindungsgemäßen Verfahren mit guter Reproduzierbarkeit Polymerdispersionen mit guten Eigenschaften hergestellt werden. Bisher wurde noch kein den heutigen technischen Anforderungen genügendes leicht reproduzierbares Verfahren bekannt, was wohl auf die leichte Pfropfung, leichte Störbarkeit der Tertiärstruktur und der sonstigen großen Reaktivität der Proteine zurückzuführen ist. Insbesondere ist überraschend, daß beim erfindungsgemäßen Verfahren auf jegliche üblichen Dispergierungshilfsmittel wie anionische, kationische, nichtionogene oder amphotere Emulgatoren, andere Schutzkolloide und die bekannten stabilisierend wirksamen Comonomeren verzichtet werden kann.

Die erfindungsgemäß hergestellten Dispersionen können als solche z. B. zur Herstellung von Klebstoffen, wie insb. Papier-, Folien-, (wasserfesten) Holzleimen, als Farb-, Textil- oder Papierhilfsmittel, in der Bauindustrie, z. B. Zusatz zu hydraulisch abbindenden Massen (insb. standfesten Zement- u. Betonmassen) verwendet werden.

Die Polymerisate können aber z. B. auch ausgefällt werden oder nach einem anderen bekannten Verfahren isoliert werden.

Die folgenden Versuche sollen das erfindungsgemäße Verfahren weiter erläutern. Die Mengen und Konzentrationen beziehen sich, sofern nicht anders angegeben, auf das Gewicht. Die Prozent-Angaben der Mengen der Komponenten der Initiatorsysteme, der Monomeren und des Proteins beziehen sich jeweils auf das Gesamtgewicht der Monomeren(ohne Ethylen), die des Festgehaltes und der Restmonomeren auf das Gesamtgewicht der Dispersionen. Der Naßrückstand ist in Gramm/1,5 kg-Ansatz angegeben. Die mittlere Teilchengröße wurde mit Nanosizer[2] in nm gemessen und ist nach der Teilchengrößeverteilung angegeben. Die Viskositäten wurden mit einem Brookfield-Viskosimeter (mPas) gemessen.

Allgemeine Vorschrift für die Beispiele 1-12 und Vergleichsversuch A-G.

In einem zylindrischen Reaktionsgefäß mit Ankerrührer, Rückflußkühler, Thermometer und Zulaufgefäßen für Initiator, Monomer(engemisch) und Pufferlösung, sowie einem Stutzen zur Entnahme von Proben wurden Wasser, Stärke, gegebenenfalls Teile des Katalysator-Systems, gegebenenfalls ein Teil der Monomeren und gegebenenfalls Zusatzstoffe vorgelegt, unter Rühren auf Reaktionstemperatur gebracht und der Rest der Monomeren, des Katalysator-Systems und Puffer in etwa 2 Stunden zudosiert. Nach Ende der Polymerisation wurde gegebenenfalls noch 1/2 Stunde in üblicher Weise unter weiterem Zusatz wasserlöslichen Initiators nachpolymerisiert.

Die Dosierung des Monomeren (abgesehen von Ethylen) wurde so eingestellt, daß

4

bei Fahrweise A : die Konzentration der Monomeren im Reaktionsgemisch zwischen 20 und 15 Gew.-%,

bei Fahrweise B zwischen 5 und 10 Gew.-% und

bei Fahrweise C bei knapp 5 Gew.-% gehalten wurde.

Die Dosierung der Monomeren als Voremulsion ist mit VE gekennzeichnet. Dabei wurden die Monomeren in einer wäßrigen Lösung des Schutzkolloids (Proteins) emulgiert.

Die Einzelheiten der Beispiele sind der folgenden Tabelle zu entnehmen. Die dabei verwendeten Abkürzungen bedeuten :

v vorgelegt

AA Acrylamid

AAA Allylacetoacetat

AB Acrylsäurebutylester

AMA Allylmethacrylat

AS Acrylsäure

E Ethylen

HEA Hydroxyethylacrylat

TBHP tert.-Butylhydroperoxid

d dosiert

OF Bis(2-ethylhexyl) fumarat

S Styrol

Si Vinyltrimethoxysilan

VA Vinylacetat

VC Vinylchlorid

Veo VeoVa[a] 10, Vinylversatat[a]

$H_2O_2$ Wasserstoffperoxid

CHP Cumylhydroperoxid

DBP Dibenzoylperoxid

PHP Pinanhydroperoxid

KPS Kaliumpersulfat

F.G. Festgehalt

i.P. isoelektrischer Punkt

NFS Natriumformaldehydsulfoxylat

NS Natriumsulfit

R.M. Restmonomergehalt

N.R. Naßrückstand

Es wurden handelsübliche Gelatinetypen (Deutsche Gelatine-Fabriken, Eberbach) bzw. handelsübliche Proteine eingesetzt.

I Getreideprotein L339, isoelektr. Punkt (i. P.) bei pH 6-7, Molgew. 20000-30000 ; Roquette

II Gelita Sol E, nicht gelierende, starke abgebaute Gelatine, i. P. 4,7-5,2

III Casinella QS, Casein, Fa. Meggle, Wasserburg ; i. P. ca. 4,6

IV Gelatine 160 B, basisch aufgeschlossene Gelatine, 160 Bloom ; i. P. 4,7-5,2

V Gelatine 80 B, basisch aufgeschlossene Gelatine, 80 Bloom ; i. P. 4,7-5,2.

Die Teilchengrößenverteilung wurde mit einem Nano-Sizer[a] gemessen und in der Form x/y angegeben. x bedeutet die sogenannte Polydispersität und liegt im Bereich 0 bis 9 (0 sehr enge Verteilung, 9 große Polydispersität).

y gibt die mittlere Teilchengröße in Nanometer an.

(Siehe Tabellen Seite 6 ff.)

| Nr. | Monomere (%) | Proteintype (%) | Katalysatorsystem (%) | Fahr-weise |
|---|---|---|---|---|
| 1 | VA; d | I (2v+4d) | TBHP(0.2v;0.7d);NFS u.NS (je 0.1;d) | VE,B |
| 2 | VA; d | II(2v+4d) | TBHP(0.2v;0.7d);NFS u.NS (je 0.2d) | VE,B |
| 3 | VA; d | III (1v+4d) | TBHP(0.2v;0.7d);NFS u.NS (je 0.2d) | VE,B |
| 4 | VA; d | III (1v+4d) | TBHP(0.2v;0.7d);NFS u.NS (je 0.3d) | B |
| 5 | VA; d | IV (4; d) | TBHP(0.2v;0.7d);NFS u.NS (je 0.2;d) | VE,B |
| 6 | VA(85)+Veo(7.9)+AA(1)+ AS(1)+AMA(0.1)+HEA(5);d | V (4; d) | CHP (0.6;v) | C |
| 7 | VA(99)+AAA(1);d | III (1v;3d) | PHP (0.7;v) | B |
| 8 | S(40;d)+AB(60;d) | III(1v+3d) | TBHP(0.2v;0.7d);NFS u.NS (je 0.2;d) | VE,A |
| 9 | S(49.5)+AB(39.5)+OF(10)+ Si(1);d | III(1v+4d) | TBHP(0.2v;0.7d);NFS u.NS (je 0.3;d) | VE,A |
| 10 | VA(15v+85d); E(50 bar;v) | III(1v+4d) | TBHP(0.4;d);NFS u.NS (je 0.2;d) | B |
| 11 | VA(15v+85d); E(50 bar;v) | V (1v+4d) | TBHP(0.4;d);NFS u.NS (je 0.2;d) | B |
| 12 | VC(30)+VA(70);d | V (1v+4d) | TBHP(0.4;d);NFS u.NS (je 0.2;d) | B |
| A | VA(70v; 30d) | V (4);d | TBHP(0.6;v);NFS u.NS (je 0.1;d) | A |
| B | VA;d | V (5); v | TBHP(0.2v;0.7d);NFS u.NS (je 0.4;d) | B |
| C | VA;d | V (1.5)+II (3.5);v | TBHP(0.2v;0.7d);NFS u.NS (je 0.3;d) | C |
| D | VA;d | V (4;d) | TBHP(0.2v;0.7d); NFS (0.5; d) | VE,B |
| E | VA; d | V (2v+4d) | KPS (0.1; d) | B |
| F | VA; d | V (1v+4d) | $H_2O_2$(0.1;d);NFS u.NS (je 0.1;d) | ---- |
| G | VA; d | V (1v+4d) | DBP(0.4;v);NFS (0.2; d) | VE |

| Nr. | T (°C) | pH | FG (%) | R.M. (%) | N.R. (g) | Aufstrich | Teilgr. Vtlg/ (nm) | Brookf. Viskosität 2min.$^{-1}$ (mPas) | 10min.$^{-1}$ (mPas) | 20min.$^{-1}$ (mPas) |
|---|---|---|---|---|---|---|---|---|---|---|
| 1 | 67 | 7.1 | 40.4 | 1.8 | 7 | klar | 6/ 950 | 120 | 360 | 520 |
| 2 | 65 | 5.5 | 51.9 | 0.3 | 0.3 | klar | 3/ 560 | 130 | 76 | 62 |
| 3 | 64 | 6.1 | 46.9 | 1.5 | 0.8 | sehr klar | 2/ 250 | 4.750 | 1.650 | 1.100 |
| 4 | 65 | 6.1 | 49.7 | 1.8 | 1.0 | sehr klar | 2/ 250 | 10.500 | 3.370 | 2.140 |
| 5 | 68 | 5.5 | 46.8 | 0.6 | – | sehr klar | 2/2000 | 187.500 | 55.200 | 32.200 |
| 6 | 68 | 6.0 | 51 | 0.4 | – | klar | 3/ 480 | 10.500 | 3.600 | 2.100 |
| 7 | 68 | 6.2 | 51.5 | 0.3 | – | klar | 3/ 420 | 9.200 | 3.050 | 1.700 |
| 8 | 70 | 7 | 49.7 | 0.8 | 9 | klar | 4/ 270 | 775 | 360 | 260 |
| 9 | 65 | 8.3 | 43.1 | 0.2 | 1.1 | sehr klar | 6/ 390 | 2.020 | 880 | 630 |
| 10 | 65 | 6.3 | 49.1 | 0.4 | – | klar | – | – | – | – |
| 11 | 65 | 5.3 | 50.3 | 0.6 | – | klar | 3/ 470 | 9.300 | 3.100 | 1.850 |
| 12 | 65 | 5.8 | 47.1 | 1.2 | – | sehr klar | – | – | – | – |
| A | 65 | 5.0 | Bei ca. 19 % FG starke Koagulatbildung, Versuch abgebrochen | | | | | | | |
| B | 70 | 5.7 | 41.1 | 0.4 | Vorzeitig wegen extrem hoher Viskosität abgebrochen | | | | | |
| C | 70 | 4.7 | 51.3 | 0.5 | nicht meßbar | stark stippig | nicht meßbar | sehr hochviskos | | |
| D | 60 | 4.7 | Nach ca. 1/2 Dosierzeit wegen Koagulatbildung abgebrochen | | | | | | | |
| E | 68 | 5.5 | Nach 1/4 der Dosierzeit schlagartig koaguliert | | | | | | | |
| F | 68 | ~5 | Nach 3/4 der Dosierzeit koaguliert | | | | | | | |
| G | 68 | 6.4 | Produkt: typisches S-Polymerisat | | | | | | | |

**Patentansprüche**

1. Verfahren zur Herstellung wäßriger Polymerdispersionen durch Polymerisation ethylenisch ungesättigter Verbindungen mittels freie Radikale liefernder, zumindest teilweise wasserlöslicher Initiatoren bei Reaktionstemperaturen von + 10 bis + 100 °C in Gegenwart mindestens eines wasserlöslichen Proteins und gegebenenfalls weiterer üblicher Zusatzstoffe unter Vorlage von höchstens 40 Gew.-% der gesamten Monomeren und Dosierung des Restes der Monomeren während der Polymerisation, dadurch gekennzeichnet, daß als Initiatoren, gegebenenfalls in Kombination mit wasserlöslichen Reduktionsmitteln, Ketonperoxide und/oder organische Hydroperoxide in Mengen von mindestens 30 mmol, bezogen auf je 1 kg des gesamten Monomeren(gemisches), und daß das (die) Protein(e) in Mengen von mindestens 3 Gew.-%, bezogen auf das Gesamtgewicht der Monomeren, eingesetzt wird (werden), wobei mindestens 30 Gew.-% des (der) Proteins (Proteine) während der Polymerisation dosiert werden, sowie daß die Polymerisation so geführt wird, daß der (die) isoelektrische(n) Punkt(e) des Proteins (der Proteine) nicht tangiert oder durchschritten wird (werden) und daß kein Emulgator vorhanden ist.

2. Verfahren nach Anspruch 1, dadurch gekennzeichnet, daß die peroxidischen Initiatoren in Kombination mit reduzierenden Schwefelverbindungen oder Ascorbinsäure eingesetzt werden.

3. Verfahren nach Anspruch 1 oder 2, dadurch gekennzeichnet, daß als peroxidische Initiatoren Alkyl- und/oder Aralkylhydroperoxide verwendet werden.

4. Verfahren nach Anspruch 1, dadurch gekennzeichnet, daß die Polymerisation bei pH-Werten oberhalb des isoelektrischen Punktes des Proteins durchgeführt wird.

5. Verwendung der Dispersionen, hergestellt nach einem der vorangehenden Ansprüche, zur Herstellung von Klebstoffen, als Farb, Textil- oder Papierhilfsmittel oder als Zusatz zu hydraulisch abbindenden Massen.

## Claims

1. Process for the preparation of aqueous polymer dispersions by polymerization of ethylenically unsaturated compounds by means of initiators which supply free radicals and are at least partly water-soluble, at reaction temperatures of + 10 to + 100 °C in the presence of at least one water-soluble protein and if appropriate further customary additives, taking not more than 40 % by weight of the total monomers and metering in the remainder of the monomers during the polymerization, characterized in that ketone peroxides and/or organic hydroperoxides are used as the initiators, if appropriate in combination with water-soluble reducing agents, in amounts of at least 30 mmol per kg of the total monomer (mixture), and in that the protein(s) is(are) used in amounts of at least 3 % by weight, based on the total weight of the monomers, at least 30 % by weight of the protein (proteins) being metered in during the polymerization, and in that the polymerization is carried out in such a manner that the isoelectric point(s) of the protein(proteins) is(are) not touched or passed, and in that no emulsifier is present.

2. Process according to Claim 1, characterized in that the peroxidic initiators are used in combination with reducing sulphur compounds or ascorbic acid.

3. Process according to Claim 1 or 2, characterized in that alkyl and/or aralkyl hydroperoxides are used as the peroxidic initiators.

4. Process according to Claim 1, characterized in that the polymerization is carried out at pH values above the isoelectric point of the protein.

5. Use of the dispersions prepared according to one of the preceding claims, for the preparation of adhesives, as colour, textile or paper auxiliaries or as an additive to hydraulically setting compositions.

## Revendications

1. Procédé pour préparer les dispersions aqueuses de polymères, par polymérisation de composés à insaturation éthylénique à l'aide d'amorceurs, au moins partiellement hydrosolubles, fournissant des radicaux libres, à des températures de réaction allant de + 10 à + 100 °C en présence d'au moins une protéine hydrosoluble et éventuellement d'autres additifs usuels, en plaçant au préalable une proportion d'au maximum 40 % en poids de la totalité des monomères et en introduisant de façon dosée le reste des monomères au cours de la polymérisation, procédé caractérisé en ce qu'on utilise comme amorceurs éventuellement en combinaison avec des réducteurs hydrosolubles, des peroxydes de cétones et/ou des hydroperoxydes organiques en des quantités minimum 30 mmoles pour chaque kg de mélange total des monomères et en ce qu'on utilise la ou les protéines en des quantités d'au moins 3 % en poids, sur la base du poids total des monomères, une proportion d'au moins 30 % en poids de la ou des protéines étant introduites de façon dosée au cours de la polymérisation et la polymérisation étant conduite de manière à ne pas se rapprocher de trop près du ou des points iso-électriques de la ou des protéines ni à excéder ces points iso-électriques, en opérant sans la présence d'un émulsifiant.

2. Procédé selon la revendication 1, caractérisé en ce qu'on utilise les amorceurs peroxydiques en combinaison avec des composés soufrés réducteurs ou avec l'acide ascorbique.

3. Procédé selon la revendication 1 ou 2, caractérisé en ce qu'on utilise comme amorceurs peroxydiques des hydroperoxydes d'alkyle et/ou d'aralkyle.

4. Procédé selon la revendication 1, caractérisé en ce qu'on conduit la polymérisation à des pH supérieurs au point iso-électrique de la protéine.

5. Utilisation des dispersions préparées selon l'une des revendications précédentes pour préparer des adhésifs ou colles, comme adjuvants pour colorants, peintures ou teintures, comme adjuvants pour du textile ou du papier, ou comme additifs à des compositions à prise hydraulique.